# EUROPÄISCHE PATENTSCHRIFT

(11) **EP 3 665 914 B1**
(45) Veröffentlichungstag und Bekanntmachung des Hinweises auf die Patenterteilung: **07.10.2020**
(21) Anmeldenummer: 18795383.1
(22) Anmeldetag: 22.10.2018
(51) Int. Cl.: H04W 84/00, H04W 4/44, H04W 4/46, H04W 4/02, H04W 88/04, H04W 40/20

(54) **VERFAHREN ZUM KOPPELN EINES ENDFAHRZEUGS MIT EINEM STATIONÄREN DATENNETZWERK SOWIE SYSTEM ZUM DURCHFÜHREN DES VERFAHRENS**
METHOD FOR COUPLING AN END VEHICLE TO A STATIONARY DATA NETWORK, AND SYSTEM FOR CARRYING OUT THE METHOD
PROCÉDÉ DE COUPLAGE D'UN VÉHICULE TERMINAL À UN RÉSEAU DE DONNÉES STATIONNAIRE ET SYSTÈME DE MISE EN OEUVRE DU PROCÉDÉ

(30) Priorität: 15.12.2017 DE 102017222905
(43) Veröffentlichungstag der Anmeldung: 17.06.2020
(73) Patentinhaber: Audi AG, 85045 Ingolstadt (DE)
(72) Erfinder: HAUBNER, Florian, 97348 Willanzheim (DE)
(86) Internationale Anmeldenummer: PCT/EP2018/078885
(87) Internationale Veröffentlichungsnummer: WO 2019/115070

(56) Entgegenhaltungen:
- EP-A2- 2 527 189
- US-A1- 2007 237 101

## Beschreibung

Die Erfindung betrifft ein Verfahren zum Koppeln eines Kraftfahrzeugs mit einem stationären Datennetzwerk, beispielsweise dem Internet. Das Kraftfahrzeug bildet das Ende einer Kommunikationsverbindung und wird deshalb im Folgenden als Endfahrzeug bezeichnet. Das andere Ende der Kommunikationsverbindung kann beispielsweise durch eine Servervorrichtung des Datennetzwerks gebildet sein. Zu der Erfindung gehört auch ein System, mittels welchem das erfindungsgemäße Verfahren durchgeführt werden kann.

Das Ausleiten von Daten aus einem Kraftfahrzeug hin zu einer Servervorrichtung in einem stationären Datennetzwerk kann kostspielig sein, da eine Übertragung über eine Mobilfunkverbindung notwendig sein kann. Dennoch ist diese Datenausleitung notwendig, um beispielsweise Kartendaten für pilotierte Fahrfunktionen auf der Grundlage von Daten aus unterschiedlichen Kraftfahrzeugen erzeugen zu können. Je mehr Daten übertragen werden können, beispielsweise Rohdaten aus Sensoren, desto mehr lässt sich aus den Daten an Informationen gewinnen. Beispielsweise können durch die Übertragung von Rohdaten Algorithmen für eine Fahrfunktion oder zur Objektdetektion in einer Servervorrichtung des Datennetzwerks verbessert werden und/oder ihr Fehlverhalten analysiert werden.

Wie bereits ausgeführt, ist aber das Übertragen von Daten mittels Mobilfunk kostspielig. Deswegen besteht derzeit nur eingeschränkt die Möglichkeit, Datenmengen aus einem Kraftfahrzeug hin zu einer Servervorrichtung zu übertragen.

Aus der WO 2016/080735 A1 ist bekannt, dass Geräte mit einem 5G-Mobilfunkmodul direkt, das heißt unter Umgehung einer Basisstation des 5G-Mobilfunknetzwerks, untereinander kommunizieren oder Daten austauschen können.

Aus der US 2007/0237101 A1 sind Apparate, Verfahren und Systeme bekannt, die auf einen richtungsabhängigen Eignungsindikator eines Kanals einwirken.

Aus der EP 2 527 189 A2 ist ein Netzwerkzugriffsystem zur Benutzung mit einer Ladestation bekannt, wobei das Netzwerkzugriffsystem zumindest eine eindeutige Identifizierung für einen Benutzer bereitstellt, um diesen einen Fernzugriff auf das Netzwerk zu ermöglichen.

Der Erfindung liegt die Aufgabe zugrunde, Daten zwischen einem Kraftfahrzeug und einem stationären Datennetzwerk, insbesondere dem Internet, auszutauschen oder zu übertragen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Koppeln eines Endfahrzeugs mit einem stationären Datennetzwerk bereitgestellt. Das Datennetzwerk kann beispielsweise das Internet sein. Es zeichnet sich als stationäres Datennetzwerk dadurch aus, dass es stationäre Leitungen, beispielsweise Kabel, aufweist. Als Endfahrzeug wird hier ein Kraftfahrzeug bezeichnet, welches das Ende einer Kommunikationsverbindung darstellt oder bildet. Das andere Ende der Kommunikationsverbindung kann beispielsweise durch eine stationäre Servervorrichtung des Datennetzwerks gebildet sein. Eine solche Servervorrichtung kann durch einen Computer oder einen Computerverbund gebildet sein. Über die Kommunikationsverbindung sollen Datenpakete übertragen werden.

Erfindungsgemäß ist nun vorgesehen, dass das Endfahrzeug hierzu nicht die Datenpakete mit dem stationären Datennetzwerk beispielsweise über eine Mobilfunkverbindung austauscht. Vielmehr ist ein weiteres Kraftfahrzeug vorgesehen, welches hier als Basisfahrzeug bezeichnet ist. Das Basisfahrzeug weist einen unvermittelten Netzwerkzugang oder direkten Datennetzwerkzugang zu dem Datennetzwerk auf. Mit anderen Worten kann das Basisfahrzeug die Datenpakete (je nach Übertragungsrichtung) direkt aus dem Datennetzwerk empfangen oder direkt in das Datennetzwerk einspeisen. Das Basisfahrzeug leitet des Weiteren mittels einer funkbasierten Kommunikationseinrichtung die Datenpakete zwischen dem Datennetzwerk und dem Endfahrzeug durch. Mit anderen Worten wird durch das Basisfahrzeug mittels der funkbasierten Kommunikationseinrichtung eine Funkverbindung betrieben oder bereitgestellt, über welche die Datenpakete aus dem Endfahrzeug empfangen werden können und dann durch das Basisfahrzeug in das Datennetzwerk eingespeist werden können oder (bei umgekehrter Übertragungsrichtung) die Datenpakete zunächst direkt aus dem Datennetzwerk durch das Basisfahrzeug empfangen und dann über die Funkverbindung mittels der funkbasierten Kommunikationseinrichtung weitergeleitet werden können.

Durch die Erfindung ergibt sich der Vorteil, dass das Endfahrzeug keine eigene Mobilfunkverbindung hin zu dem stationären Datennetzwerk über eine Basisstation eines Mobilfunknetzwerks bereitstellen oder unterhalten muss, um die Datenpakete mit dem Datennetzwerk auszutauschen. Vielmehr reicht es, wenn das Endfahrzeug über eine Funkverbindung Datenpakete mit dem Basisfahrzeug austauscht. Für diese Funkverbindung ist keine Mobilfunkanbindung an das Mobilfunknetzwerk nötig. Insbesondere fallen für diese Funkverbindung keine Mobilfunkgebühren bei einem Mobilfunkanbieter an. Beispielsweise kann die an sich bekannte Fahrzeug-zu-Fahrzeug-Kommunikation mittels eines WiFi-Standards genutzt werden.

Ferner ist der besagte unvermittelte Netzwerkzugang gegeben, indem das Basisfahrzeug die Datenpakete durchleitet, während es für einen elektrischen Ladevorgang über ein Ladekabel an eine elektrische Ladesäule angeschlossen ist und hierbei der Netzwerkzugang zu dem Datennetzwerk besteht. Der Netzwerkzugang kann dabei über das Ladekabel bereitgestellt sein (beispielsweise gemäß einer so genannten Powerline Communication - PLC). Zusätzlich oder alternativ dazu kann das Basisfahrzeug die Datenpakete durchleiten, während eine Netzwerkzugangseinrichtung des Basisfahrzeugs, beispielsweise eine WiFi-Kommunikationseinrichtung, mit einem vorbestimmten heimischen WLAN eines Benutzers des Basisfahrzeugs gekoppelt ist (WLAN - wireless local area network) und/oder während die Netzwerkzugangseinrichtung mit einem öffentlichen WLAN gekoppelt ist. Bei diesen Verbindungstypen fällt in vorteilhafter Weise keine Mobilfunkgebühr für die Nutzung eines Mobilfunknetzwerks an. Somit kann das Basisfahrzeug Datenpakete mit dem stationären Datennetzwerk austauschen, ohne hierfür Mobilfunkgebühren für die Nutzung eines Mobilfunknetzwerks zahlen zu müssen. Eine Mobilfunkverbindung über eine Mobilfunknetzwerk stellt somit keinen direkten, sondern einen indirekten Netzwerkzugang zu dem stationären Datennetzwerk dar, da Datenpakete zunächst durch das Mobilfunknetzwerk gerouted werden müssen, um das Datennetzwerk zu erreichen beziehungsweise (bei umgekehrter Übertragungsrichtung) um an ein mobiles Endgerät oder ein Mobilfunkmodul eines Kraftfahrzeugs per Funk ausgesendet werden zu können.

Die Erfindung umfasst auch Ausführungsformen, durch die sich zusätzliche Vorteile ergeben.

Die funkbasierte Kommunikation vom Basisfahrzeug hin zum Endfahrzeug beruht gemäß einer Ausführungsform darauf, dass die funkbasierte Kommunikationseinrichtung des Basisfahrzeugs auf einem 5G-Standard basiert, also auf einem Mobilfunkstandard, hierbei aber die Datenpakete unabhängig von einer jeglichen Basisstation eines 5G-Netzwerks über eine 5G-basierte Fahrzeug-zu-Fahrzeug-Kommunikation durchgeleitet werden. Dies wird auch als VANET - Vehicular Ad Hoc Network bezeichnet. Das Basisfahrzeug kann beispielsweise ein Meldesignal oder Angebotssignal mittels der funkbasierten Kommunikationseinrichtung aussenden, welches anderen Kraftfahrzeugen, insbesondere dem Endfahrzeug, signalisiert, dass das Basisfahrzeug einen unvermittelten Netzwerkzugang bereitstellen kann und Datenpakete durchleiten kann.

Eine Ausführungsform sieht vor, dass für eine Reichweitenverlängerung, wenn also eine funkbasierte unmittelbare Kommunikation zwischen dem Basisfahrzeug und dem Endfahrzeug aufgrund eines zu großen Abstands der beiden unmöglich ist, zumindest ein Vermittlerfahrzeug das Basisfahrzeug mit dem Endfahrzeug koppelt und das zumindest eine Vermittlerfahrzeug die Datenpakete zwischen dem Basisfahrzeug und dem Endfahrzeug durchleitet. Ein Vermittlerfahrzeug stellt also eine Relaisstation dar und kann deshalb auch als Relaisfahrzeug bezeichnet werden. Die Kommunikationsverbindung zwischen Endfahrzeug und stationärem Datennetzwerk wird also nicht nur über das Basisfahrzeug geführt, sondern zusätzlich über zumindest ein Vermittlerfahrzeug. Auch hierfür kann wieder die beschriebene 5G-basierte Fahrzeug-zu-Fahrzeug-Kommunikation genutzt werden.

Das zumindest eine Vermittlerfahrzeug kann beispielsweise ein parkendes Fahrzeug und/oder zumindest ein bewegtes Fahrzeug sein. Eine Nutzung eines parkenden Fahrzeugs weist den Vorteil auf, dass es seine Position während des Durchleitens der Datenpakete unverändert beibehält und somit ein Verbindungsabbruch aufgrund einer wachsenden Entfernung eines Vermittlungsfahrzeugs vermieden ist. Die Nutzung eines bewegten Fahrzeugs weist den Vorteil auf, dass mittels des bewegten Fahrzeugs die Datenpakete physisch bewegt oder transportiert werden können, um dann zeitversetzt weitergeleitet werden zu können.

So ist entsprechend durch eine Ausführungsform vorgesehen, dass das zumindest eine Vermittlerfahrzeug die Datenpakete für das Durchleiten empfängt und erst zu einem späteren Zeitpunkt, wenn zumindest eine vorbestimmte Verbindungsbedingung erfüllt ist, weiterleitet. Mit anderen Worten erfolgt das Empfangen und das darauffolgende Weiterleiten der Datenpakete zeitversetzt, z.B. mit einem Zeitversatz von mehr als 10 Sekunden oder mehr als 1 Minute. Es muss also in vorteilhafter Weise keine durchgängige Kommunikationsverbindung zwischen dem Basisfahrzeug und dem Endfahrzeug bereitgestellt sein. Vielmehr können die Datenpakete immer dann weitergeleitet werden, wenn sich aktuell eine Gelegenheit dazu bietet, was vom Fachmann durch die Verbindungsbedingung festgelegt werden kann. So kann die Verbindungsbedingung beispielsweise besagen, dass eine Weiterleitung der Datenpakete erfolgt, falls eine funkbasierte Kommunikationsverbindung zu dem Basisfahrzeug oder dem Endfahrzeug oder einem anderen Vermittlerfahrzeug, welches (je nach Übertragungsrichtung) dem Basisfahrzeug oder dem Endfahrzeug näher ist, besteht.

Gemäß einer Ausführungsform wird für das Koppeln des Endfahrzeugs mit dem Datennetzwerk ein vorbestimmtes Routingprotokoll verwendet oder vorgesehen, gemäß welchem durch das Endfahrzeug und/oder durch ein jeweiliges Vermittlungsfahrzeug und/oder durch das Basisfahrzeug jeweils für mehrere mögliche andere Fahrzeuge eine Konnektivitätserwartung geprüft wird, welche eine Nutzbarkeit des jeweiligen anderen Fahrzeugs als mögliches Vermittlerfahrzeug oder Basisfahrzeug angibt. Die Datenpakete werden dann zumindest an ein solches dieser anderen Fahrzeuge, welches mit der höchsten Wahrscheinlichkeit und/oder in der kürzesten Zeit von allen geprüften Fahrzeugen einen Empfangsbereich eines Vermittlerfahrzeugs oder des Basisfahrzeugs oder des Endfahrzeugs erreichen wird oder selbst das Basisfahrzeug werden wird, übertragen. Mit anderen Worten wird die Kommunikationsverbindung zwischen Endfahrzeug und Datennetzwerk aufgebaut, indem ausgehend von einem bereits an der Kommunikationsverbindung beteiligten Fahrzeug (Basisfahrzeug/Vermittlungsfahrzeug/Endfahrzeug) mehrere in Frage kommende andere Fahrzeuge in Bezug auf ihre Konnektivitätserwartung geprüft werden. Es wird also festgestellt, ob ein anderes Fahrzeug zum Ausbauen oder Aufbauen der Kommunikationsverbindung geeignet ist. Die Datenpakete werden dann zumindest an das am besten geeignete Fahrzeug übertragen, das einen Empfangsbereich eines Vermittlerfahrzeugs oder des Basisfahrzeugs oder des Endfahrzeugs erreichen wird oder das selbst ein Basisfahrzeug werden wird, das heißt einen unvermittelten Netzwerkzugang zu dem Datennetzwerk aufweisen wird. Hierdurch ergibt sich der Vorteil, dass die Wahrscheinlichkeit für eine erfolgreiche und/oder schnelle Übertragung der Datenpakete maximiert wird.

Es ist vorgesehen, dass die Konnektivitätserwartung anhand einer aktuellen Position und einer geplanten und/oder prognostizierten Fahrroute und/oder anhand eines Ladezustands eines Energiespeichers des jeweiligen anderen Fahrzeugs und/oder einer erwarteten Ladezeit und/oder einem Fahrziel des jeweiligen geprüften Fahrzeugs geprüft wird. Anhand der aktuellen Position und der Fahrroute kann erkannt werden, ob und/oder wann ein Empfangsbereich eines Vermittlerfahrzeugs oder des Basisfahrzeugs erreicht wird. Anhand eines Ladezustands kann erkannt werden, ob das Fahrzeug selbst demnächst an einer Ladestation halten wird und damit als Basisfahrzeug fungieren kann. Anhand einer erwarteten Ladezeit kann ermittelt werden, wie lange das Fahrzeug seinen Energiespeicher nachladen wird und wie lange es daher auch mit dem Datennetzwerk verbunden sein wird. Anhand eines Fahrziels kann erkannt werden, ob das Fahrzeug demnächst sein heimisches WLAN erreichen wird.

Die Datenpakete müssen aber nicht nur an dasjenige Fahrzeug mit der größten Wahrscheinlichkeit und/oder mit der kürzesten Zeit übermittelt werden. Eine Ausführungsform sieht vor, dass Kopien der Datenpakete ausgehend von dem Basisfahrzeug oder dem Endfahrzeug oder einem Vermittlerfahrzeug jeweils an mehrere Vermittlerfahrzeuge zur Weiterleitung ausgesendet werden. Mit anderen Worten wird ein Streueffekt genutzt. Mit anderen Worten werden mehrere mögliche Übertragungsrouten genutzt. Die Kopien werden nach einer vorbestimmten Zeitdauer und/oder nach einer vorbestimmten Anzahl N von Weiterleitungen (zwischen Fahrzeugen) gelöscht. Ein Weiterleiten wird im Englischen auch als Hop (Sprung) bezeichnet. Das Löschen erfolgt also nach N Hops. Das Löschen erfolgt dabei, falls die jeweilige Kopie bis dahin nicht einen vorbestimmten Empfänger, insbesondere das Endfahrzeug oder das Basisfahrzeug, erreicht hat. Hierdurch werden in vorteilhafter Weise mehrere mögliche Routen zum Weiterleiten der Datenpakete genutzt oder probiert, ohne dass es zu einem Datenstau aufgrund zu vieler Kopien kommt.

Das Überprüfen der Konnektivitätserwartung und/oder das Aussenden der Kopien kann durch das jeweilige sendende Fahrzeug und/oder das jeweilige empfangende Fahrzeug und/oder durch eine zentrale Koordinierungseinrichtung, beispielsweise die zentrale Servervorrichtung des Datennetzwerks, entschieden oder gesteuert werden.

Die Datenpakete können in der besagten Weise zwischen einer Servervorrichtung des Datennetzwerks und dem Endfahrzeug ausgetauscht werden. Hierbei sind beide Übertragungsrichtungen möglich. Als Datenpakete können beispielsweise Debug-Daten, Sensordaten, Kamerabilder, Kartendaten, ein Kartenupdate, ein Softwareupdate und/oder Nutzerverhaltensdaten übertragen werden, wobei jeweils nur ein Datentyp, mehrere Datentypen oder mehrere der genannten Datentypen übertragen werden können.

Es kann des Weiteren vorgesehen sein, dass vorbestimmte, zeitkritische Datenpakete nicht über das Basisfahrzeug durchgeleitet werden, sondern aus über eine Mobilfunkverbindung und ein Mobilfunknetzwerk zwischen dem Endfahrzeug und dem Datennetzwerk übertragen werden. Es kann vorgesehen sein, dass lediglich vorbestimmte, nicht-zeitkritische Datenpakete in der beschriebenen Weise durch das Basisfahrzeug durchgeleitet werden.

Die Erfindung umfasst auch ein System zum Koppeln eines Endfahrzeugs mit einem stationären Datennetzwerk, beispielsweise mit dem Internet. Das System kann das Basisfahrzeug sowie zusätzlich das Endfahrzeug und/oder zumindest ein Vermittlungsfahrzeug umfassen. Zumindest ist vorgesehen, dass das System ein Basisfahrzeug umfasst, welches dazu eingerichtet ist, bei vorliegendem unvermittelten (direkten) Netzwerkzugang zu dem Datennetzwerk mittels einer funkbasierten Kommunikationseinrichtung Datenpakete zwischen dem Datennetzwerk und einem Endfahrzeug durchzuleiten. In der beschriebenen Weise ist unter dem unvermittelten Netzwerk insbesondere zu verstehen, dass zwischen dem Basisfahrzeug und dem Datennetzwerk der Austausch der Datenpakete ohne ein Mobilfunknetzwerk erfolgt.

Das System umfasst Ausführungsformen, die Merkmale aufweisen, wie sie bereits im Zusammenhang mit den Ausführungsformen des erfindungsgemäßen Verfahren beschrieben worden sind. Aus diesem Grund sind die entsprechenden Merkmale der Ausführungsformen des erfindungsgemäßen Systems hier nicht noch einmal beschrieben.

Die Erfindung umfasst auch die Kombinationen der beschriebenen Ausführungsformen.

Im Folgenden ist ein Ausführungsbeispiel der Erfindung beschrieben. Hierzu zeigt:
- Fig. 1: eine schematische Darstellung einer Ausführungsform des erfindungsgemäßen Systems; und
- Fig. 2: ein Flussschaudiagramm zu einer Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

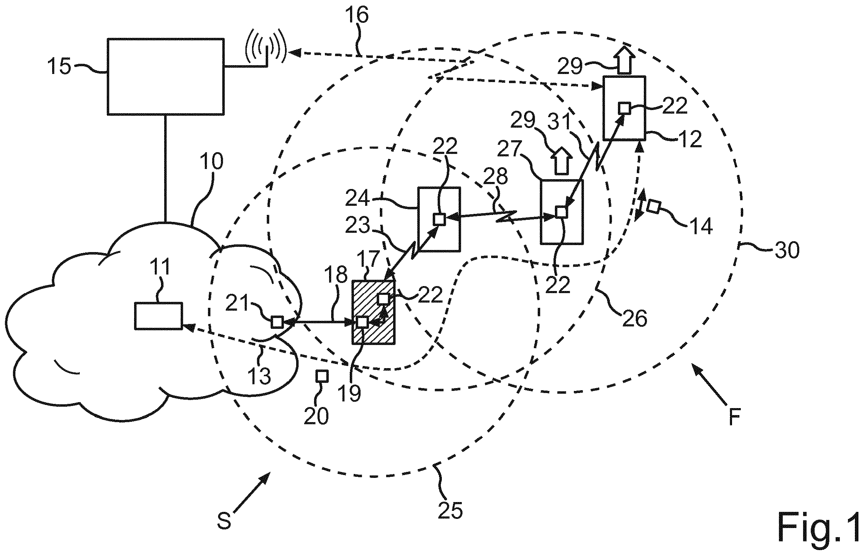

Fig. 1 zeigt ein stationäres Datennetzwerk 10, bei dem es sich beispielsweise um das Internet handeln kann, insbesondere den durch stationäre Datenleitungen, wie Kabel, bereitgestellten Anteil des Internets. In dem Datennetzwerk 10 kann eine Servervorrichtung 11 bereitgestellt sein, die beispielsweise als ein Backend für eine Fahrzeugflotte fungieren oder ausgestaltet sein kann. Mit der Servervorrichtung 11 kann ein Endfahrzeug 12 eine Kommunikationsverbindung 13 unterhalten oder betreiben, um Datenpakete 14 auszutauschen. Datenpakete 14 können von der Servervorrichtung 11 zum Endfahrzeug 12 hin übertragen werden (zum Beispiel Datenpakete für ein Softwareupdate oder ein Kartenupdate) oder vom Endfahrzeug 12 hin zur Servervorrichtung 11 (zum Beispiel Datenpakte mit Backupdaten oder Diagnosedaten oder Sensordaten). Das Endfahrzeug 12 kann hierbei darauf verzichten, über ein Mobilfunknetzwerk 15 indirekt mittels eines Mobilfunkverbindung 16 die Datenpakete auszutauschen oder zu übertragen.

Stattdessen kann vorgesehen sein, dass die Datenpakete 14 durch ein Basisfahrzeug 17, das einen unvermittelten oder direkten Netzwerkzugang 18 zu dem Datennetzwerk 10 betreibt oder aufweist, durchgeleitet werden. Mit anderen Worten kann das Basisfahrzeug 17 an das Datennetzwerk 10 z.B. über einen Router angeschlossen sein. Für den Netzwerkzugang 18 kann das Basisfahrzeug 17 eine Netzwerkzugangseinrichtung 19 aufweisen. Die Netzwerkzugangseinrichtung 19 kann beispielsweise ein Ethernet-Controller und/oder ein WiFi-Controller sein. Der Netzwerkzugang 18 kann beispielsweise auf der Grundlage einer Ethernet-Verbindung über ein Ethernet-Kabel oder ein Powerline-Kabel, beispielsweise einer elektrischen Ladestation 20, oder eine WiFi-Funkverbindung zu einem WiFi-Router 21 des Datennetzwerks 10 sein.

Das Basisfahrzeug 17 kann des Weiteren eine funkbasierte Kommunikationseinrichtung 22 aufweisen, bei der es sich insbesondere um ein Mobilfunkmodul gemäß dem 5G-Standard handeln kann. Mittels der Kommunikationseinrichtung 22 kann das Basisfahrzeug 17 eine Funkverbindung 23 zu dem Endfahrzeug 12 oder (wie in Fig. 1 gezeigt) zu einem Vermittlerfahrzeug 24 betreiben oder bereitstellen. Das Basisfahrzeug 12 und das Vermittlerfahrzeug 24 kann hierzu jeweils ebenfalls eine Kommunikationseinrichtung 22 der genannten Art aufweisen. Die Funkverbindung 23 kann insbesondere auf einer Ausführungsform des 5G-Standards basieren, bei welcher keine Basisstation des Mobilfunknetzwerks 15 verwendet wird, sondern eine direkte Funkverbindung 23 zwischen jeweils zwei Kommunikationseinrichtungen 22 vorgesehen wird. Das Basisfahrzeug 17 kann ein parkendes Fahrzeug sein. Das Vermittlerfahrzeug 22 kann beispielsweise ebenfalls parkend sein. Das Vermittlerfahrzeug 22 kann sich in einer Reichweite 25 der Kommunikationseinrichtung 22 des Basisfahrzeugs 17 befinden. Dagegen kann das Endfahrzeug 12 außerhalb der Reichweite 25 angeordnet sein. Für eine Reichweitenerweiterung kann nun das Vermittlerfahrzeug 24 innerhalb seiner Reichweite 26 seiner Kommunikationseinrichtung 22 ein weiteres Vermittlerfahrzeug 27 z.B. mittels einer Verbindungsbedingung ausfindig machen, welches ebenfalls eine Kommunikationseinrichtung 22 aufweisen kann, sodass eine weitere Funkverbindung 28 zwischen dem Vermittlerfahrzeug 24 und dem Vermittlerfahrzeug 27 aufgebaut oder bereitgestellt werden kann. Die Verbindungsbedingung kann z.B. vorgeben, dass das Vermittlerfahrzeug 27 zwischen dem Vermittlerfahrzeug 24 und dem Endfahrzeug 12 positioniert sein muss, was z.B. mittels eines GNSS (Global Navigation Satellite System), z.B. des GPS (Global Positioning System) ermittelt werden kann. In Fig. 1 ist beispielhaft dargestellt, dass das Vermittlerfahrzeug 27 sich mit einer Fahrgeschwindigkeit 29 bewegen kann. Das Endfahrzeug 12 kann sich ebenfalls mit einer Fahrgeschwindigkeit 29 bewegen. Das Vermittlerfahrzeug 27 befindet sich innerhalb der Reichweite 26 des Vermittlerfahrzeugs 24. Das Vermittlerfahrzeug 27 kann mittels seiner Kommunikationseinrichtung 22 eine Reichweite 30 aufweisen, in welcher sich das Endfahrzeug 12 befinden kann. Das Vermittlerfahrzeug 27 und das Endfahrzeug 12 können jeweils ebenfalls eine Kommunikationseinrichtung 22 aufweisen. Somit kann auch eine Funkverbindung 31 zwischen dem Vermittlerfahrzeug 27 und dem Endfahrzeug 12 aufgebaut oder bereitgestellt werden. Somit kann durch Durchleiten der Datenpakete 24 durch das Basisfahrzeug 17 und die hier beispielhaft dargestellten beiden Vermittlerfahrzeuge 24, 27 die Kommunikationsverbindung 13 zwischen der Servervorrichtung 11 und dem Endfahrzeug 12 bereitgestellt werden, ohne dass das Mobilfunknetzwerk 15 oder irgendeine Basisstation irgendeines Mobilfunknetzwerks genutzt werden muss.

Die Fahrzeuge 12, 17, 24, 27 können beispielsweise jeweils ein Kraftfahrzeug, insbesondere ein Personenkraftwagen oder Lastkraftwagen, sein. Insgesamt ergibt sich somit ein System S zum Bereitstellen eines eigenen Funknetzwerks F.

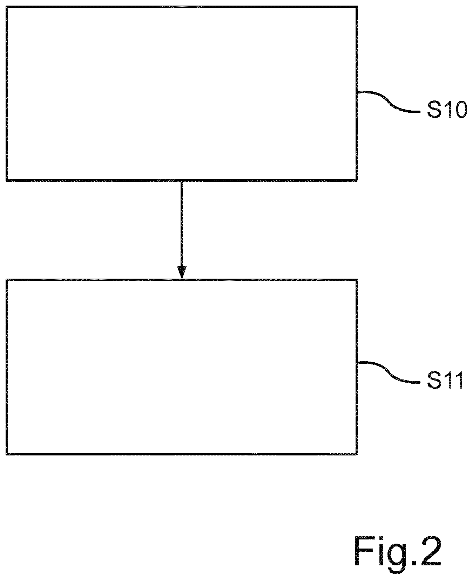

Fig. 2 zeigt ein Verfahren, wie es durch das in Fig. 1 insgesamt dargestellte System S mit dem Basisfahrzeug 17 realisiert werden kann. In einem Schritt S10 kann das Basisfahrzeug 17 den Netzwerkzugang 18 aufbauen oder einrichten und daraufhin kann seine Reichweite 25 eine Funkverbindung 23 mit einem Endfahrzeug oder einem Vermittlerfahrzeug 24 aufbauen. In einem Schritt S12 kann daraufhin das Basisfahrzeug 17 Datenpakete 14 zwischen dem Datennetzwerk 10 und der Funkverbindung 23 durchleiten. Somit kann über eine direkte Funkverbindung 23 ein Endfahrzeug 12 oder ein Vermittlerfahrzeug 24 Datenpakete 14 in das Datennetzwerk 10 einleiten oder aus diesem empfangen, ohne dass ein Mobilfunknetzwerk oder eine Basisstation eines Mobilfunknetzwerks genutzt werden muss.

Der unvermittelte Netzwerkzugang basiert insbesondere auf einer kabelgebundenen Anbindung an das Datennetzwerk 10 oder einer WiFi-basierten Anbindung an das Datennetzwerk 10.

Ausgehend von dem Basisfahrzeug 17 ergeben die Funkverbindungen 23, 28, 31 und die möglichen weiteren Funkverbindungen innerhalb der Reichweiten 25, 26, 30 insgesamt das Funknetzwerk F des Systems S. Es ist ein Funknetzwerk F das ohne eine Infrastruktur eines Mobilfunknetzwerks 15 auskommt. Anstelle einer Basisstation oder anstelle von Basisstationen des Mobilfunknetzwerks 15 sind Basisfahrzeuge wie das Basisfahrzeug 17 mit direktem Netzwerkzugang 18 vorgesehen.

Datenpakete 14, die für eine zentrale Servervorrichtung 11 relevant sind, müssen nicht zeitkritisch sein (z.B. Kartendaten, Kartenupdates, Software Updates, Nutzerverhalten). Es kommt also in der Regel nicht auf Minuten an. Bei neuen Fahrzeugmodellen wird immer mehr Datenverkehr dieser Art anfallen. Speziell die Maschinen-Mobilfunk-Tarife für die Fahrzeuge und das Roaming sind aber sehr teuer und können dazu führen, dass viele Datenübertragungen nicht lukrativ sind. Um mittel- und langfristig die Kosten zur Ausleitung der Daten aus einem Endfahrzeug 12 zu einer Servervorrichtung 11 und zum Aktualisieren von Informationen in Richtung zum Endfahrzeug zu senken, kann mit dem System S ein eigenes 5G-Mobilfunknetz unabhängig von einem Mobilfunkanbieter eines Mobilfunknetzwerks 15 aufgebaut werden.

Für den Austausch von zeitkritischen Daten (z.B. Gefahrenwarnung auf bestimmter Strecke) fällt meist wenig Datenvolumen an, da diese Daten meist ziemlich kompakt sind. Als Rückfallebene kann für solche Daten ein Mobilfunknetz 15 eines Mobilfunkanbieters genutzt werden.

Das eigene Mobilfunknetz des Systems S setzt sich dagegen aus folgenden Teilnehmern zusammen. Jeder Teilnehmer hat bevorzugt ein 5G-Modul (Kommunikationseinrichtung 22) und Speicher speziell zum Puffern von Datenpaketen 14:
- Basisfahrzeug 17 oder mehrere Basisfahrzeuge: Teilnehmer mit direktem Internetzugriff (z.B. über Internet an Ladesäule, heimisches W-Lan, Öffentliches W-Lan): Diese Teilnehmer stellen anderen Teilnehmern via 5G die Verbindung zum Internet (Datennetzwerk 10) zur Verfügung.
- Parkende Vermittlerfahrzeuge 24: Statische Teilnehmer ohne direkten Internetzugriff (Parkende Fahrzeuge): Diese Teilnehmer erweitern jeweils die Reichweite des Netzes um den Radius ihrer 5G-Reichweite 26 und können Datenpakete 14 von bzw. zu Teilnehmern mit direktem Internetzugriff weiterleiten. Dabei ist es auch möglich Datenpakete 14 beispielsweise erst über zehn Teilnehmer weiterzuleiten bis ein Teilnehmer mit direktem Internetzugriff die Datenpakete 14 an eine Servervorrichtung 11 senden kann.
- Fahrende Vermittlerfahrzeuge 27: Dynamische Teilnehmer ohne direkten Internetzugriff (Fahrende Fahrzeuge): Diese Teilnehmer können über statische Teilnehmer oder über andere dynamische Teilnehmer kommunizieren. Sollte gerade keine Konnektivität vorhanden sein, werden die Datenpakete 14 gepuffert und zu einem späteren Zeitpunkt verschickt.

Zum Routen der Datenpakete 14 im Funknetzwerk des Systems S, also für die Entscheidung welche Datenpakete 14 an welchen Teilnehmer weitergeleitet werden, wird die Konnektivitätserwartung der einzelnen Teilnehmer bewertet. Diese wird durch das Wissen über die Teilnehmer selbst aus aktueller Position und aktueller Konnektivität, prädizierter Position anhand von erwarteter Ladezeit, Route, Standzeit und/oder dadurch prädizierter Konnektivität bestimmt. Kopien der Datenpakete 14 können auch an mehrere Teilnehmer weitergeleitet und nach einer bestimmten Zeit im Funknetzwerk verworfen werden, um die Wahrscheinlichkeit zu erhöhen, dass die Nachricht innerhalb einer bestimmten Zeit an der Servervorrichtung 11 bzw. dem Endfahrzeug 12 vorliegt.

Die Latenzen im eigenen Funknetzwerk können zum Teil sehr hoch ausfallen (speziell zu Beginn wenn wenige Fahrzeuge ausgestattet sind).

Ein Beispiel dazu sind wenige Fahrzeuge in einer ländlichen Region, die alle keine Internetverbindung über das eigene Mobilfunknetz haben. Die Datenpakete können diese Fahrzeuge an ein Fahrzeug in der Nähe weiterleiten, das am wahrscheinlichsten als nächstes in eine Zone mit Konnektivität kommt, weil es beispielsweise gerade eine Route in eine städtische Region berechnet. Latenzzeit wäre in diesem Fall Minuten oder Stunden.

Speziell Elektrofahrzeuge müssen während der Ladezyklen für einen längeren Zeitraum mit einem Ladekabel verbunden werden. Über Technologien, wie 5G, ist eine Direktkommunikation von Fahrzeug zu Fahrzeug möglich.

Vorgeschlagen wird daher ein hybrides Verfahren, das einerseits am Ladekabel befindliche Fahrzeuge als Basisstationen / Basisfahrzeug eines eigenen Funknetzwerks verwendet und zusätzlich andere bewegte Fahrzeuge als Relay-Stationen oder Vermittlerfahrzeuge nutzt. Darüber wird ein eigenes Funknetzwerk bestehend aus allen 5G-fähigen Fahrzeugen aufgebaut. Es kann somit ein eigenes Funknetz F aufgebaut werden, über das Datenpakete 14 z.B. mit Fahrzeugsensorinformationen oder andere Daten übertragen werden.

Ladestationen können dafür mit einer Breitbandverbindung zum Datennetzwerk 10 ausgestattet werden (Stromkabel müssen ohnehin zum großen Teil verlegt werden). In den Ladestecker der Ladestation 20 kann eine Datenleitung integriert werden.

Fahrzeuge, die momentan laden, dienen als Basisstationen oder Basisfahrzeug des Funknetzes (haben über Ladestation Anbindung an Internet und können über 5G diese Anbindung anderen Fahrzeugen bereitstellen).

Fahrzeuge, die aktuell nicht laden, sondern fahren, können mit den ladenden Fahrzeugen kommunizieren. Wann immer ein anderes ladendes Fahrzeug erreichbar ist, können gepufferte Datenpakete 14 an eine Servervorrichtung 11 übertragen werden. Zusätzliche dienen fahrende Fahrzeuge dabei als Relay-Stationen oder Vermittlerfahrzeuge, um die ladenden Fahrzeuge für weiter entfernte Fahrzeuge verfügbar zu machen und dadurch die Reichweite zu vergrößern.

Sobald genug Fahrzeuge im System S vorhanden sind, kann der Kommunikationsdienst auch anderen Nutzern angeboten werden.

Kern des Ganzen ist der Fakt, dass die meisten Debug-Daten und Sensor-Rohdaten eine hohe Datenmenge haben, allerdings nicht zeitkritisch sind und deswegen auch nicht direkt ausgeleitet werden müssen.

Zur Ausleitung bei schlechter Verfügbarkeit von ladenden Fahrzeugen wäre es denkbar, ein eigenes Routing-Protokoll zu entwickeln, das die Datenpakete an andere Fahrzeuge mit 5G-Kommunikationseinrichtung 22 weiterleitet, welche laut Route wahrscheinlicher oder früher in Reichweite des eigenen Funknetzwerks kommt.

Zeitkritische Daten können speziell zu Beginn bei schlechter Netzabdeckung (aufgrund weniger Fahrzeuge mit 5G) nach wie vor über Mobilfunkanbieter verschickt werden. Diese Daten haben meist eine geringe Datenmenge (beispielsweise Lokale Gefahrenwarnungen).

Insgesamt zeigen die Beispiele, wie durch die Erfindung zwischen Kraftfahrzeugen ein eigenes 5G-Mobilfunknetz aufgebaut werden kann.

## Patentansprüche

1. Verfahren zum Koppeln eines Endfahrzeugs (12) mit einem stationären Datennetzwerk (10), wobei
ein Basisfahrzeug (17), welches einen direkten Netzwerkzugang (18) zu dem Datennetzwerk (10) aufweist, mittels einer funkbasierten Kommunikationseinrichtung (22) Datenpakete (14) zwischen dem Datennetzwerk (10) und dem Endfahrzeug (12) durchleitet und hierbei für eine Reichweitenverlängerung zumindest ein Vermittlerfahrzeug (24, 27) das Basisfahrzeug (12) mit dem Endfahrzeug (12) koppelt und das zumindest eine Vermittlerfahrzeug (24, 27) die Datenpakete (14) zwischen dem Basisfahrzeug (17) und dem Endfahrzeug (12) durchleitet, wobei für das Koppeln ein vorbestimmtes Routingprotokoll vorgesehen ist, gemäß welchem durch das Endfahrzeug (12) und/oder ein jeweiliges Vermittlungsfahrzeug (24, 27) für mehrere mögliche andere Fahrzeuge eine Konnektivitätserwartung geprüft wird, welche eine Nutzbarkeit des jeweiligen anderen Fahrzeugs als mögliches Basisfahrzeug angibt, und die Datenpakete (14) zumindest an ein solches der anderen Fahrzeuge, welches mit der höchsten Wahrscheinlichkeit und/oder in der kürzesten Zeit von allen geprüften Fahrzeugen selbst das Basisfahrzeug werden wird, übertragen werden,
**dadurch gekennzeichnet, dass**
die Konnektivitätserwartung aus einer prädizierten Position anhand eines Ladezustands eines Energiespeichers und anhand von einer Route und/oder einem Fahrziel des jeweiligen geprüften Fahrzeugs ermittelt und dadurch eine prädizierte Konnektivität bestimmt wird und dann das Basisfahrzeug (12) die Datenpakete (14) durchleitet, während es für einen elektrischen Ladevorgang über ein Ladekabel an eine elektrische Ladesäule (20) angeschlossen ist und der Netzwerkzugang (18) besteht.

2. Verfahren nach Anspruch 1, wobei das Basisfahrzeug (12) die Datenpakete (14) durchleitet, während eine Netzwerkzugangseinrichtung (19) des Basisfahrzeugs (17) mit einem vorbestimmten heimischen WLAN eines Benutzers des Basisfahrzeugs (17) gekoppelt ist und/oder während die Netzwerkzugangseinrichtung (19) mit einem öffentlichen WLAN gekoppelt ist.

3. Verfahren nach einem der vorhergehenden Ansprüche, wobei die funkbasierte Kommunikationseinrichtung (22) auf einem 5G-Standard basiert und die Datenpakete (14) unabhängig von einer jeglichen Basisstation eines 5G-Netzwerks (15) über eine 5G-basierte Fahrzeug-zu-Fahrzeug-Kommunikation durchgeleitet werden.

4. Verfahren nach einem der vorhergehenden Ansprüche, wobei von dem zumindest einen Vermittlerfahrzeug (24, 27) zumindest eines ein parkendes Fahrzeug (24) und/oder zumindest eines ein bewegtes Fahrzeug (27) ist.

5. Verfahren nach einem der vorhergehenden Ansprüche, wobei das zumindest eine Vermittlerfahrzeug (24, 27) die Datenpakete (14) für das Durchleiten empfängt und erst zu einem späteren Zeitpunkt, wenn zumindest eine vorbestimmte Verbindungsbedingung erfüllt ist, weiterleitet.

6. Verfahren nach einem der vorhergehenden Ansprüche, wobei die Konnektivitätserwartung anhand einer aktuellen Position und einer geplanten und/oder prognostizierten Fahrroute und/oder einem Fahrziel des jeweiligen geprüften Fahrzeugs festgestellt wird.

7. Verfahren nach einem der vorhergehenden Ansprüche, wobei Kopien der Datenpakete (14) von dem Basisfahrzeug (17) oder dem Endfahrzeug (12) oder einem Vermittlerfahrzeug (24, 27) aus an mehrere Vermittlerfahrzeuge (24, 27) zur Weiterleitung ausgesendet werden und die Kopien nach einer vorbestimmten Zeitdauer und/oder vorbestimmter Anzahl an Weiterleitungen gelöscht werden, falls sie bis dahin nicht einen vorbestimmten Empfänger, insbesondere das Endfahrzeug (12) oder das Basisfahrzeug (17), erreicht haben.

8. System (S) zum Koppeln eines Endfahrzeugs (12) mit einem stationären Datennetzwerk (10), wobei das System (S) zumindest ein Basisfahrzeug (17) und zumindest ein Vermittlerfahrzeug (24, 27) und ein Endfahrzeug (12) umfasst, wobei das Basisfahrzeug (17) dazu eingerichtet ist, bei vorliegendem direktem Netzwerkzugang (18) zu dem Datennetzwerk (10) mittels einer funkbasierten Kommunikationseinrichtung (22) Datenpakete (14) zwischen dem Datennetzwerk (10) und dem Endfahrzeug (12) durchzuleiten, **dadurch gekennzeichnet, dass** das System (S) dazu eingerichtet ist, ein Verfahren nach einem der vorhergehenden Ansprüche durchzuführen.

## Claims

1. Method for coupling an end vehicle (12) to a stationary data network (10), wherein
a base vehicle (17), which has a direct network access (18) to the data network (10), conducts data packets (14) between the data network (10) and the end vehicle (12) by means of a radio-based communication apparatus (22) and hereby, for an extension of range, at least one mediator vehicle (24, 27) couples the base vehicle (12) to the end vehicle (12) and the at least one mediator vehicle (24, 27) conducts the data packets (14) between the base vehicle (17) and the end vehicle (12), wherein, for the coupling, a predetermined routing protocol is provided, according to which a connectivity expectation is checked by the end vehicle (12) and/or a respective mediating vehicle (24, 27) for multiple possible other vehicles, said connectivity expectation indicating a usability of the respective other vehicle as possible base vehicle, and the data packets (14) are transmitted at least to one such of the other vehicles, which, of all the checked vehicles, will most probably and/or within the shortest amount of time itself become the base vehicle,
**characterised in that**
the connectivity expectation is established from a predicated position on the basis of a charge state of an energy store and on the basis of a route and/or a travel destination of the respective checked vehicle and in this way a predicated connectivity is determined and then the base vehicle (12) conducts the data packets (14), while it is connected to an electric charging station (20) by way of a charging cable for an electric charging process and the network access (18) exists.

2. Method according to claim 1, wherein the base vehicle (12) conducts the data packets (14), while a network access apparatus (19) of the base vehicle (17) is coupled to a predetermined local WLAN of a user of the base vehicle (17) and/or while the network access apparatus (19) is coupled to a public WLAN.

3. Method according to any of the preceding claims, wherein the radio-based communication apparatus (22) is based on a 5G standard and the data packets (14) are conducted independently of any base station of a 5G network (15) via a 5G-based vehicle-to-vehicle communication.

4. Method according to any of the preceding claims, wherein, of the at least one mediator vehicle (24, 27), at least one is a parked vehicle (24) and/or at least one is a moving vehicle (27).

5. Method according to any of the preceding claims, wherein the at least one mediator vehicle (24, 27) receives the data packets (14) for conducting and does not forward them until a later point in time, when at least one predetermined connection condition is fulfilled.

6. Method according to any of the preceding claims, wherein the connectivity expectation is established on the basis of a current position and a planned and/or forecast travel route and/or a travel destination of the respective checked vehicle.

7. Method according to any of the preceding claims, wherein copies of the data packets (14) are sent from the base vehicle (17) or the end vehicle (12) or a mediator vehicle (24, 27) to multiple mediator vehicles (24, 27) for forwarding and the copies are deleted after a predetermined period of time and/or predetermined number of forwarding actions, if they have not by then reached a predetermined recipient, in particular the end vehicle (12) or the base vehicle (17).

8. System (S) for coupling an end vehicle (12) to a stationary data network (10), wherein the system (S) comprises at least one base vehicle (17) and at least one mediator vehicle (24, 27) and one end vehicle (12), wherein the base vehicle (17) is configured to conduct data packets (14) between the data network (10) and the end vehicle (12) by means of a radio-based communication apparatus (22), when there is direct network access (18) to the data network (10), **characterised in that** the system (S) is configured to carry out a method according to any of the preceding claims.

## Revendications

1. Procédé de couplage d'un véhicule terminal (12) à un réseau de données stationnaire (10), dans lequel
un véhicule de base (17), qui présente un accès direct (18) au réseau de données (10), passe transmet des paquets de données (14) entre le réseau de données (10) et le véhicule terminal (12) au moyen d'un dispositif de communication radio (22), et ainsi au moins un véhicule intermédiaire (24, 27) couple le véhicule de base (12) au véhicule terminal (12) pour une extension de la portée et l'au moins un véhicule intermédiaire (24, 27) transmet les paquets de données (14) entre le véhicule de base (17) et le véhicule terminal (12), un protocole de routage prédéterminé étant prévu pour le couplage, selon lequel une attente de connectivité est contrôlée par le véhicule terminal (12) et/ou un véhicule intermédiaire respectif (24, 27) pour plusieurs autres véhicules possibles, qui indique une utilisabilité de l'autre véhicule respectif comme véhicule de base possible, et les paquets de données (14) sont transmis au moins à l'un tel des autres véhicules, qui devient lui-même le véhicule de base avec la plus grande probabilité et/ou dans le temps le plus court de tous les véhicules contrôlés,
**caractérisé en ce que**
l'attente de connectivité est déterminée à partir d'une position prédite à l'aide d'un état de charge d'un accumulateur d'énergie et à l'aide d'un itinéraire et/ou d'une destination du véhicule contrôlé respectif et **en ce qu'**une connectivité prédite est ainsi déterminée, puis le véhicule de base (12) transmet les paquets de données (14) tout en étant connecté pour une opération de recharge électrique par l'intermédiaire d'un câble de charge à une colonne de charge électrique (20) et l'accès au réseau (18) étant fourni.

2. Procédé selon la revendication 1, dans lequel le véhicule de base (12) transmet les paquets de données (14) pendant qu'un dispositif d'accès au réseau (19) du véhicule de base (17) est couplé à un réseau sans fil domestique prédéterminé d'un utilisateur du véhicule de base (17) et/ou pendant que le dispositif d'accès au réseau (19) est couplé à un réseau sans fil public.

3. Procédé selon l'une quelconque des revendications précédentes, dans lequel le dispositif de communication radio (22) est basé sur une norme 5G et les paquets de données (14) sont transmis indépendamment d'une quelconque station de base d'un réseau 5G (15) par l'intermédiaire d'une communication véhicule à véhicule basée sur la norme 5G.

4. Procédé selon l'une quelconque des revendications précédentes, dans lequel parmi l'au moins un véhicule intermédiaire (24, 27), au moins un est un véhicule se garant (24) et/ou au moins un est un véhicule en mouvement (27).

5. Procédé selon l'une quelconque des revendications précédentes, dans lequel l'au moins un véhicule intermédiaire (24, 27) reçoit les paquets de données (14) destinés à la transmission et ne les transmet que plus tard, lorsqu'au moins une condition de connexion prédéterminée est remplie.

6. Procédé selon l'une quelconque des revendications précédentes, dans lequel l'attente de connectivité est déterminée à l'aide d'une position actuelle et d'un itinéraire planifié et/ou prévu et/ou d'une destination du véhicule contrôlé respectif.

7. Procédé selon l'une quelconque des revendications précédentes, dans lequel des copies des paquets de données (14) sont envoyées pour transmission du véhicule de base (17) ou du véhicule terminal (12) ou d'un véhicule intermédiaire (24, 27) à plusieurs véhicules intermédiaires (24, 27) et les copies sont effacées après une durée prédéterminée et/ou un nombre prédéterminé de transmissions si elles n'ont pas encore atteint un destinataire prédéterminé, en particulier le véhicule terminal (12) ou le véhicule de base (17).

8. Système (S) destiné à coupler un véhicule terminal (12) à un réseau de données stationnaire (10), le système (S) comprenant au moins un véhicule de base (17) et au moins un véhicule intermédiaire (24, 27) et un véhicule terminal (12), le véhicule de base (17) étant configuré, en présence de l'accès direct (18) au réseau de données (10), pour transmettre des paquets de données (14) entre le réseau de données (10) et le véhicule terminal (12) au moyen d'un dispositif de communication radio (22), **caractérisé en ce que** le système (S) est configuré pour effectuer un procédé selon l'une quelconque des revendications précédentes.
